# EUROPEAN PATENT APPLICATION

(11) **EP 4 711 935 A1**
(43) Date of publication of application: **18.03.2026**
(21) Application number: 24841942.6
(22) Date of filing: 05.03.2024
(51) Int. Cl.: G06F 12/02

(54) **MEMORY MANAGEMENT METHOD, ELECTRONIC DEVICE, AND STORAGE MEDIUM**

(30) Priority: 14.07.2023 CN 202310873179
(71) Applicant: Honor Device Co., Ltd., Shenzhen, Guangdong 518040 (CN)
(72) Inventor: WANG, Xin, Shenzhen, Guangdong 518040 (CN); LIN, Kunli, Shenzhen, Guangdong 518040 (CN); TIAN, Xiaobin, Shenzhen, Guangdong 518040 (CN); ZHOU, Xiaolong, Shenzhen, Guangdong 518040 (CN)
(74) Representative: Gill Jennings & Every LLP
(86) International application number: PCT/CN2024/080102
(87) International publication number: WO 2025/015939

(57) **Abstract**

This application relates to the field of terminal technologies, and relates to a memory management method, an electronic device, and a storage medium. The method includes: writing the memory management method in a form of software code onto a kernel layer, and separating the software code from kernel code. A kernel may call the software code by using a call function to manage memory space. For example, an anonymous page corresponding to an application is compressed into block space, and a compression page corresponding to the application is dumped into a universal flash storage. In this way, memory pressure can be reduced without modifying the kernel code.

## Description

This application claims priority to Chinese Patent Application No. 2023108731790, entitled "MEMORY MANAGEMENT METHOD, ELECTRONIC DEVICE, AND STORAGE MEDIUM" and filed with the China National Intellectual Property Administration on July 14, 2023, which is incorporated herein by reference in its entirety.

### TECHNICAL FIELD

This application relates to the field of terminal technologies, and in particular, to a memory management method, an electronic device, and a storage medium.

### BACKGROUND

When an electronic device starts an application, the electronic device applies to a memory for memory space storing relevant data of the application, for example, a file-backed page and an anonymous page. The file-backed page belongs to reclaimable memory, and data in the file-backed page has a backup in another storage device. Therefore, the data in the file-backed page may be directly discarded to free up memory space corresponding to the file-backed page. Then, when the data in the file-backed page is needed, the data in the file-backed page is re-obtained from the another storage device. The anonymous page stores data (for example, an intermediate result of a logical operation) in a running process. Because the data may be accessed a plurality of times in short time in the running process of the application, the data cannot be directly discarded. However, in the running process of the application, more and more data may be required to be stored into the anonymous page. If the anonymous page in the memory is always divided to store the data, a storage load of the memory is increased.

In view of this, there are some current technical solutions. When memory pressure is large, the data in the anonymous page is dumped into another storage device, for example, a magnetic disk or a universal flash storage, and then the data is read into the anonymous page of the memory when needed. To implement such a memory management solution, kernel code is required to be correspondingly modified.

### SUMMARY

To resolve a problem in an existing memory management solution that kernel code is required to be correspondingly modified, embodiments of this application provide a memory management method, an electronic device, and a storage medium.

According to a first aspect, an embodiment of this application provides a memory management method, applied to an electronic device. The electronic device includes a kernel layer, the kernel layer includes a memory management engine and a kernel, and the memory management method includes: calling, by the kernel, a memory control group cluster in the memory management engine if a first storage of the electronic device satisfies a first preset condition, to compress data in a part of anonymous pages of the first storage and store the compressed data into first storage space in the first storage; and calling, by the kernel, the memory control group cluster in the memory management engine if the first storage of the electronic device satisfies a second preset condition, to store a part or all of the compressed data in the first storage space into a second storage.

According to the foregoing solution, modification on code in the memory management engine does not affect kernel code, to avoid a limitation of modifying the kernel code while reducing memory pressure.

It may be understood that, the first storage may be a memory, the first storage space in the first storage may be block space obtained through division on the memory, and the block space may store compressed data that is not frequently accessed.

In some optional instances, the first storage is a memory, and the second storage is a magnetic disk or a universal flash storage.

In some optional instances, the first preset condition includes: a data storage volume of the first storage is greater than a first preset data storage volume; and the second preset condition includes: the data storage volume of the first storage is greater than a second preset data storage volume, where a data storage volume difference between the first preset data storage volume and the second preset data storage volume is within a preset difference range.

In some optional instances, that a data storage volume of the first storage is greater than a first preset data storage volume may be described as that storage pressure of the first storage satisfies the first preset condition. That the data storage volume of the second storage is greater than a second preset data storage volume may be described as that storage pressure of the second storage satisfies the second preset condition.

In some optional instances, the first preset data storage volume may be equal to the second preset data storage volume, the first preset data storage volume may be greater than the second preset data storage volume, or the first preset data storage volume may be less than the second preset data storage volume.

In this embodiment of this application, when the data storage volume of the first storage is greater than the first preset data storage volume, that is, when the memory pressure satisfies the first preset condition, the data in the part of the anonymous pages in the first storage may be compressed and the compressed data is stored into the first storage space in the first storage, to reduce the memory pressure. When the data storage volume of the first storage is greater than the second preset data storage volume, that is, when the memory pressure satisfies the second preset condition, the part or all of the compressed data in the first storage space may be stored into the second storage, to reduce the memory pressure.

In some optional instances, a memory control group in the memory control group cluster includes relevant information of memory space storing relevant data of an application; and the calling, by the kernel, the memory control group cluster in the memory management engine if the first storage of the electronic device satisfies a second preset condition, to store a part or all of the compressed data in the first storage space into a second storage includes: sending, by the kernel, an information obtaining instruction to the memory management engine; and obtaining, by the kernel, the relevant information of the memory space storing the relevant data of the application, and storing the part or all of the compressed data in the first storage space into the second storage based on the relevant information.

It may be understood that, the memory control group corresponding to the application may include a method for managing the memory space storing the relevant data of the application, and the relevant information describing the memory space storing the relevant data of the application.

In some optional instances, the method further includes: creating, when it is detected that the application is started, a first memory control group corresponding to the application in the kernel, to obtain a first memory control group cluster; and creating a second memory control group corresponding to the first memory control group in the memory management engine, to obtain a second memory control group cluster.

In some optional instances, the calling, by the kernel, a memory control group cluster in the memory management engine, to compress data in a part of anonymous pages of the first storage and store the compressed data into first storage space in the first storage includes: calling, by the kernel, the second memory control group cluster in the memory management engine, to cause a life cycle of the first memory control group in the first memory control group cluster to be the same as a life cycle of the corresponding second memory control group in the second memory control group cluster, where the life cycle of the first memory control group includes any one of online, offline, removed, and free-up life stages of the first memory control group; and compressing the data in the part of the anonymous pages of the first storage based on life stages of first memory control groups in the first memory control group cluster, and storing the compressed data into the first storage space in the first storage.

In this embodiment of this application, the first memory control group cluster and the second memory control group cluster are synchronized, so that storage space of the first storage may be managed based on an entire life cycle corresponding to the application.

In some optional instances, the compressing the data in the part of the anonymous pages of the first storage, and storing the compressed data into the first storage space in the first storage includes: compressing data in a part of the anonymous pages whose access frequency is lower than an average access frequency in the first storage, and storing the compressed data into the first storage space in the first storage.

In this embodiment of this application, the data in the part of the anonymous pages whose access frequency is lower than the average access frequency is compressed, to reduce the memory pressure.

In some optional instances, the calling, by the kernel, the memory control group cluster in the memory management engine, to store a part or all of the compressed data in the first storage space into a second storage includes: calling, by the kernel, the second memory control group cluster in the memory management engine, to cause a life cycle of the first memory control group in the first memory control group cluster to be the same as a life cycle of the corresponding second memory control group in the second memory control group cluster, where the life cycle of the first memory control group includes any one of online, offline, removed, and free-up life stages of the first memory control group; and storing the part of all the compressed data obtained in the first storage space into the second storage based on life stages of first memory control groups in the first memory control group cluster.

In some optional instances, the storing the part or all of the compressed data in the first storage space into the second storage includes: dumping a part or all of the compressed data whose accessed frequency is lower than an average access frequency in the first storage space into the second storage.

In embodiments of this application, the part or all of the compressed data whose access frequency is lower than the average access frequency is dumped into the second storage, to reduce the memory pressure, reduce frequent reading of the second storage, and increase a service life of the second storage.

In some optional instances, the electronic device includes a non-uniform memory access architecture, and the method includes: calling, by the kernel, a memory management process in the memory management engine if a node memory in the non-uniform memory access architecture satisfies the first preset condition, to compress data in a part of anonymous pages of the node memory and store the compressed data into the first storage space in the first storage; and calling, by the kernel, the memory management process in the memory management engine if the node memory in the non-uniform memory access architecture satisfies the second preset condition, to store a part or all of the compressed data in the node memory into the second storage.

According to a second aspect, this application provides an electronic device. The electronic device includes a memory and a processor. The memory is configured to store instructions executed by one or more processors of the electronic device. The processor is one of the one or more processors of the electronic device, and is configured to perform the memory management method described in this application.

According to a third aspect, this application provides a readable storage medium. The readable storage medium stores instructions. The instructions, when executed on an electronic device, enable the electronic device to perform the memory management method described in this application.

### BRIEF DESCRIPTION OF DRAWINGS

FIG. 1 is a schematic diagram of a memory management method according to some embodiments of this application;
FIG. 2 is a schematic diagram of another memory management method according to some embodiments of this application;
FIG. 3 is a schematic diagram of a software structure of an electronic device according to some embodiments of this application;
FIG. 4 is a schematic diagram of a software structure of another electronic device according to some embodiments of this application;
FIG. 5 is a schematic flowchart of a memory management method according to some embodiments of this application;
FIG. 6 is a schematic flowchart of synchronizing a life cycle of a memory control group in a memory management engine and a life cycle of a memory control group in a memory management module in a kernel according to some embodiments of this application;
FIG. 7 is a schematic flowchart of managing a memory according to some embodiments of this application; and
FIG. 8 is a schematic diagram of a hardware structure of an electronic device according to some embodiments of this application.

### DESCRIPTION OF EMBODIMENTS

Illustrative embodiments of this application include, but are not limited to, a memory management method, an electronic device, and a medium.

The memory management method described in embodiments of this application may be applied to an electronic device. The electronic device may also be referred to as user equipment (User Equipment, UE), a mobile station (Mobile Station, MS), a mobile terminal (Mobile Terminal), or the like. Optionally, the electronic device may have a capability of communicating a radio access network (Radio Access Network, RAN) with one or more core networks. For example, the electronic device may be a mobile phone (or referred to as a "cellular" phone), or a computer having a mobile property.

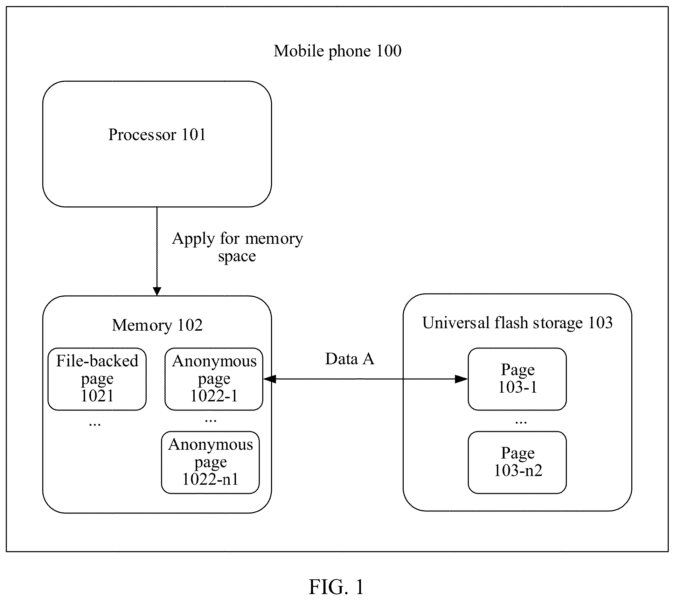

As described above, in some technical solutions, memory management may be performed by storing data in an anonymous page into another storage device. For example, FIG. 1 shows a manner of storing anonymous pages into a universal flash storage to perform memory management in a mobile phone 100. As shown in FIG. 1, the mobile phone 100 includes a processor 101, a memory 102, and a universal flash storage 103. In a process of running an application, the processor 101 applies to the memory 102 for memory space storing relevant data of the application, for example, a file-backed page 1021 and an anonymous page 1022-1 to an anonymous page 1022-n1. If memory pressure satisfies a first preset condition, for example, there is a large quantity of stored relevant data and there are a large quantity of anonymous pages, data stored into a part or all of the anonymous pages is dumped into the universal flash storage 103.

For example, data A stored into the anonymous page 1022-1 is dumped into a page 103-1 of the universal flash storage, to free up memory space corresponding to the anonymous page 1022-1. When the data A is needed, the data A is read from the page 103-1 of the universal flash storage into the anonymous page 1022-1 of the memory 102. However, frequently reading data from the universal flash storage 103 affects a service life of the universal flash storage 103.

In view of this, in some specific instances, only data that is in anonymous pages and that is not frequently accessed is sequentially compressed to a set region in the memory and dumped into the universal flash storage based on storage pressure of the memory, to reduce a frequency of reading data from the universal flash storage and reduce impact on the service life of the universal flash storage.

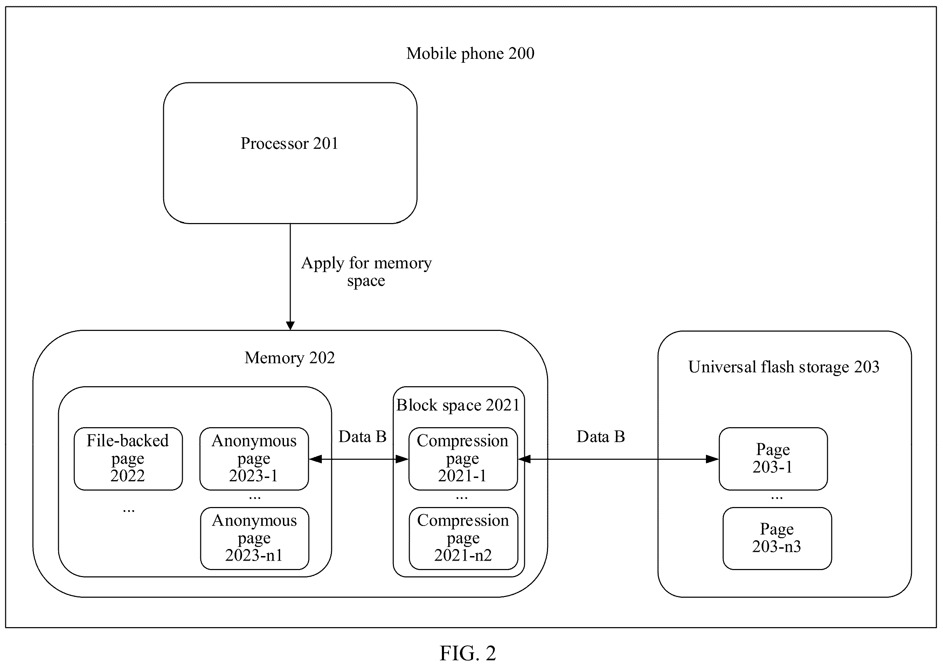

As shown in FIG. 2, a mobile phone 200 includes a processor 201, a memory 202, and a universal flash storage 203. Partial space of the memory 202 is divided into block space 2021, a file-backed page 2022, and an anonymous page 2023-1 to an anonymous page 2023-n1. As described above, in a process of running an application, the processor 201 applies to the memory 202 for memory space storing relevant data of the application, for example, the file-backed page 2022 and the anonymous page 2023-1 to the anonymous page 2023-n1. If memory pressure satisfies a first preset condition, for example, there is a large quantity of stored relevant data and there are a large quantity of anonymous pages, data that is in a part or all of the anonymous pages and that is not frequently accessed is compressed and then stored into the block space. However, because the block space is partial space obtained through division on the memory, the data that is stored into the block space and that is not frequently accessed is actually still stored into the memory. Data that needs to be stored into the block space and that is not frequently accessed probably increases in the running process of the application. If the data is always stored into the block space, a storage load of the memory is increased again. Therefore, if the memory pressure satisfies a second preset condition, for example, there is a large quantity of compressed data, a part or all of the data in the block space is dumped into the universal flash storage. The first preset condition may be the same as the second preset condition. For example, the first preset condition is that a data storage volume of the memory is greater than a first preset data storage volume, the second preset condition is that the data storage volume of the memory is greater than a second preset data storage volume, and the first preset data storage volume is equal to the second preset data storage volume.

For example, when the memory pressure satisfies the first preset condition, data B stored into the anonymous page 2023-1 is compressed and then stored into a compression page 2021-1 of the block space 2021, to free up memory space corresponding to the anonymous page 2023-1. When the memory pressure satisfies the second preset condition, the data B in the compression page 2021-1 is dumped into a dump page 203-1 of the universal flash storage 203, to free up memory space corresponding to the compression page 2021-1. When the data B is needed, the data B is read from the dump page 203-1 of the universal flash storage 203 into the compression page 2021-1 of the memory 202.

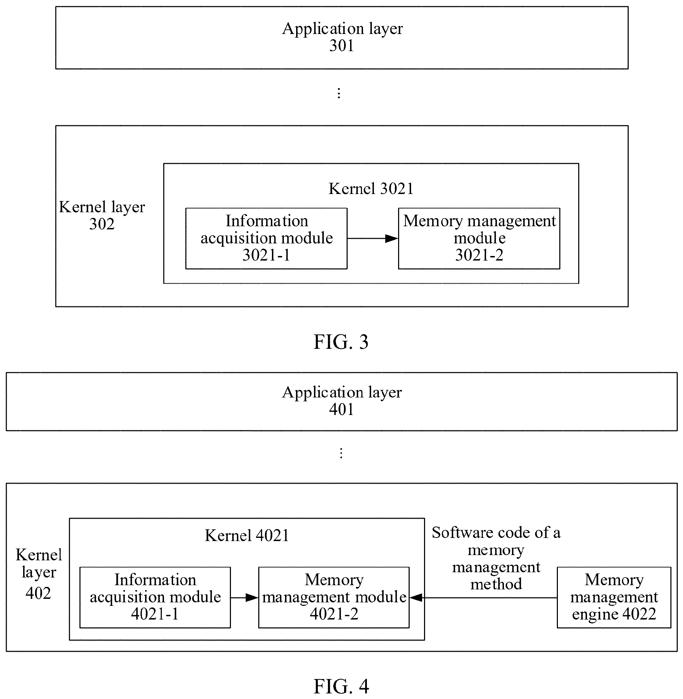

However, in these memory management methods, intrusive modification is required to be performed on kernel code, but the kernel code cannot be directly modified in some regions, causing a limitation on updating of the kernel code. The following describes the problem with reference to FIG. 3.

Specifically, FIG. 3 shows a schematic diagram of a software structure of an electronic device. The electronic device may be an electronic device on which an Android (Android) system or a Linux system is installed. As shown in FIG. 3, the software structure of the electronic device may include an application layer 301 and a kernel layer 302. The kernel layer 302 may include a kernel 3021. The kernel 3021 may include an information acquisition module 3021-1 and a memory management module 3021-2. The information acquisition module 3021-1 may acquire status information of a memory (for example, a memory pressure status), and transmit the status information to the memory management module 3021-2. In this way, when memory pressure is large, the memory management module 3021-2 may manage, based on a memory management method, memory space storing relevant data of an application (for example, compressing an anonymous page into block space and dumping a compression page into a universal flash storage). However, in these memory management methods, intrusive modification is required to be performed on kernel code, but the kernel code cannot be directly modified in some regions, causing limitation on updating of the kernel code.

To resolve the foregoing problem, embodiments of this application provide a memory management method. The memory management method may be written onto a kernel layer in a form of software code, and is written onto a software module different from a software module on which kernel code is located. For example, a kernel and a memory management engine are arranged on the kernel layer of an electronic device. The kernel stores the kernel code, and the memory management engine stores relevant code of the memory management method. The kernel may call the software code by using a call function to manage memory space, for example, compressing an anonymous page corresponding to an application to block space, and dumping a compression page corresponding to the application into a universal flash storage. Modification on code in the memory management engine does not affect the kernel code, to avoid a limitation of modifying the kernel code while reducing memory pressure.

As shown in FIG. 4, in some optional instances, a software structure of the electronic device may include an application layer 401 and a kernel layer 402. The kernel layer 402 may include a kernel 4021 and a memory management engine 4022. The kernel 4021 may include an information acquisition module 4021-1 and a memory management module 4021-2. When the information acquisition module 4021-1 acquires that memory pressure satisfies a preset condition, the kernel may read software code of a memory management method in the memory management engine 4022 into the memory management module 4021-2 by using a call function, and manage a memory based on the software code of the memory management method read from the memory management module 4021-2.

In some optional instances, the call function may be a hook (hook) function owned by the kernel, or may be another function in the kernel that can call code in the memory management engine.

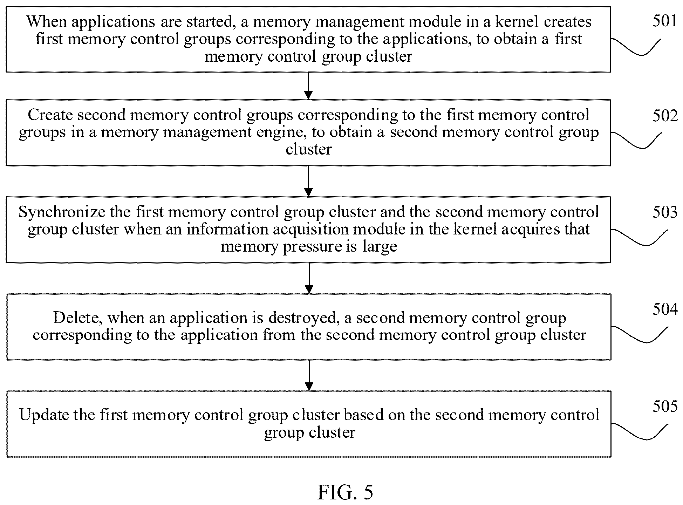

The following describes the memory management method described in embodiments of this application in detail. FIG. 5 is a schematic flowchart of a memory management method. The memory management method may be applied to an electronic device. As described above, the electronic device may include an application layer and a kernel layer. The kernel layer may include a kernel and a memory management engine. The kernel may include an information acquisition module and a memory management module. As shown in FIG. 5, the memory management method may include the following steps:

501: When applications are started, the memory management module in the kernel creates first memory control groups corresponding to the applications, to obtain a first memory control group cluster.

It may be understood that, a memory control group corresponding to an application may include a method for managing memory space storing relevant data of the application, and relevant information describing the memory space storing the relevant data of the application.

It may be understood that, when the application is started, a memory may be applied to for the memory space storing the relevant data of the application, for example, a file-backed page and an anonymous page. In addition, the memory management module in the kernel may create the first memory control group (memory control group, memcg) corresponding to the application, so that the kernel may manage, based on the first memory control group, the memory space storing the relevant data of the application. The kernel needs to call a second memory control group in the memory management engine based on the call function, so that the first memory control group in the memory management module in the kernel is synchronized with the second memory control group in the memory management engine, to manage the memory space storing the relevant data of the application.

In some optional instances, the first memory control group may have a first identifier. The first identifier may be a unique identity identifier of the first memory control group.

It may be understood that, the electronic device may include one or more applications. The application may be a system application in the electronic device, or may be a third-party application in the electronic device. For example, applications such as a browser, a game application, a music application, and a shopping application may be installed in the electronic device. When each application is started, the memory may be applied to for memory space storing relevant data of the application, for example, a file-backed page and an anonymous page.

For example, when the browser is started at first time, the memory may be applied to for memory space storing relevant data of the browser, for example, an anonymous page 1, and the memory management module in the kernel may create a first memory control group (where a first identifier is memcg11) corresponding to the browser, so that the kernel may manage the anonymous page 1 storing the relevant data of the browser based on the first memory control group (where the first identifier is memcg11). When the game application is started at second time, the memory may be applied to for memory space storing relevant data of the game application, for example, an anonymous page 2, and the memory management module in the kernel may create a first memory control group (where a first identifier is memcg12) corresponding to the game application, so that the kernel may manage the anonymous page 2 storing the relevant data of the game application based on the first memory control group (where the first identifier is memcg12). The first time is earlier than the second time.

In some optional instances, when a process of an application is started, the memory may be applied to for memory space storing relevant data of the process, and the memory management module in the kernel may create a first memory control group corresponding to the application corresponding to the process, so that the kernel may manage the memory space storing the relevant data of the process of the application based on the first memory control group.

For example, when a process a of the music application is started at third time and a process b of the music application is started at fourth time, the memory may be applied to for memory space storing relevant data of the process a, for example, an anonymous page 3, and the memory may also be applied to for memory space storing relevant data of the process b, for example, an anonymous page 4.

If the memory management module in the kernel does not include a first memory control group corresponding to the music application, the memory management module in the kernel may create the first memory control group (where a first identifier is memcg13) corresponding to the music application corresponding to the process a and the process b, so that the kernel may manage the anonymous page 3 storing the process a of the music application and manage the anonymous page 4 storing the process b of the music application based on the first memory control group (where the first identifier is memcg13).

It may be understood that, a plurality of first memory control groups created by the memory management module in the kernel may be referred to as the first memory control group cluster of the memory management module. For example, based on the foregoing listed examples, the first memory control group (where the first identifier is memcg11) corresponding to the browser, the first memory control group (where the first identifier is memcg12) corresponding to the game application, and the first memory control group (where the first identifier is memcg13) corresponding to the music application that are created by the memory management module in the kernel may form the first memory control group cluster of the memory management module.

502: Create second memory control groups corresponding to the first memory control groups in the memory management engine, to obtain a second memory control group cluster.

It may be understood that, the second memory control group may include the relevant information describing the memory space storing the relevant data of the application and a method for managing the memory space storing the relevant data of the application. The relevant information describing the memory space storing the relevant data of the application may include a size of the memory space storing the relevant data of the application, an accessed frequency of the relevant data in the memory space storing the relevant data of the application, that is, an active status of the memory space storing the relevant data of the application, and the like. The method for managing the memory space storing the relevant data of the application may include: reclaiming, based on a memory reclaiming parameter and the relevant information describing storing of the relevant data of the application, the memory space storing the relevant data of the application. The method for managing the memory space storing the relevant data of the application may further include: reading data in a dump page corresponding to the application from a universal flash storage into a compression page in block space and decompressing the data in the compression page corresponding to the application to an anonymous page. The second memory control group may have a second identifier. The second identifier may be a unique identity identifier of the second memory control group.

In some optional instances, a specific manner of reclaiming the memory space storing the relevant data of the application may include: compressing and storing, based on the memory reclaiming parameter and the relevant information describing storing of the relevant data of the application, the data in the anonymous page corresponding to the application into the compression page in the block space. The data in the compression page corresponding to the application is dumped into the dump page in the universal flash storage based on the memory reclaiming parameter and the relevant information describing storing of the relevant data of the application. The memory reclaiming parameter may be a preset data reclaiming volume. For example, when a data volume stored into the memory is greater than a preset storage threshold, a compression page with the preset data reclaiming volume in compression pages of the memory may be dumped into the universal flash storage.

For example, the memory management engine may create a second memory control group (where a second identifier is memcg21) corresponding to the browser at the first time, create a second memory control group (where a second identifier is memcg22) corresponding to the game application at the second time, and create a second memory control group (where a second identifier is memcg23) corresponding to the music application at the third time.

The second memory control group (where the second identifier is memcg21) corresponding to the browser includes relevant information describing the memory space storing the relevant data of the browser, for example, a size of the anonymous page 1 is X1 KB, and an accessed frequency of the relevant data of the browser stored into the anonymous page 1 is higher than an average access frequency.

The second memory control group (where the second identifier is memcg22) corresponding to the game application includes relevant information describing the memory space storing the relevant data of the game application, for example, a size of the anonymous page 1 is X2 KB, and an accessed frequency of the relevant data of the browser stored into the anonymous page 1 is higher than the average access frequency.

The second memory control group (where the second identifier is memcg23) corresponding to the music application includes: relevant information describing the memory space storing the relevant data of the music application, for example, a size of the anonymous page 3 is X3 KB and an accessed frequency of the relevant data of the music application stored into the anonymous page 3 is lower than the average access frequency; and relevant information describing the memory space storing the relevant data of the process of the music application, for example, a size of the anonymous page 4 is X4 KB and an accessed frequency of the relevant data of the music application stored into the anonymous page 4 is lower than the average access frequency.

The second memory control group (where the second identifier is memcg23) corresponding to the music application may further include a method for managing the memory space storing the relevant data of the application, for example, first compressing and storing the data in the anonymous page 3 into a compression page 1 of the block space, and then compressing and storing the data in the anonymous page 4 into a compression page 2 of the block space; and adding a compression page 3 to a compression page linked list of the second memory control group, and then adding a compression page 4 to the compression page linked list.

It may be understood that, a plurality of second memory control groups in the memory management engine may be referred to as the second memory control group cluster of the memory management engine. For example, based on the foregoing listed examples, the second memory control group (where the second identifier is memcg21) corresponding to the first memory control group corresponding to the browser, the second memory control group (where the second identifier is memcg22) corresponding to the first memory control group corresponding to the game application, and the second memory control group (where the second identifier is memcg23) corresponding to the first memory control group corresponding to the music application may be created in the memory management engine, to form the second memory control group cluster of the memory management engine.

In embodiments of this application, the second memory control group is created in the memory management engine, that is, relevant code of the relevant information describing the memory space storing the relevant data of the application and the method for managing the memory space storing the relevant data of the application is written onto the kernel layer, and is separated from kernel code, to avoid massive intrusive modification on the kernel code, and reduce complexity of updating relevant code of an execution operation for reducing memory pressure.

503: Synchronize the first memory control group cluster and the second memory control group cluster when the information acquisition module in the kernel acquires that the memory pressure is large.

It may be understood that, synchronizing the first memory control group cluster and the second memory control group cluster may be that: The kernel reads, based on the call function, the relevant information of the memory space storing the relevant data of the application and the method for managing the memory space storing the relevant data of the application that are included in the second memory control group into the first memory control group, so that the kernel may manage, based on the read method for managing the memory space storing the relevant data of the application, the memory space storing the relevant data of the application. For example, the kernel may first compress and store the data in the anonymous page 3 into the compression page 1 of the block space, and then compress and store the data in the anonymous page 4 into the compression page 2 of the block space; and add the compression page 3 to the compression page linked list in the second memory control group, and then add the compression page 4 to the compression page linked list.

504: Delete, when an application is destroyed, a second memory control group corresponding to the application from the second memory control group cluster.

In some optional instances, destroying the application may be destroying all processes of the application. For example, when the music application is closed, both the process a and the process b of the music application are destroyed. In this way, the second memory control group (where the second identifier is memcg23) corresponding to the music application may be deleted from the second memory control group cluster. In this process, the memory space storing the relevant data of the music application may also be freed up. For example, the relevant data of the process a of the music application is stored into the compression page 1 in the block space, and the relevant data of the process b of the music application is stored into the compression page 2 in the block space. In this case, the compression page 1 storing the relevant data of the process a of the music application is freed up, and the compression page 2 storing the relevant data of the process b of the music application is also freed up.

In some optional instances, when the application is destroyed, a reference count of the second memory control group cluster may be reduced by one when the information acquisition module in the kernel acquires that compression pages that store all the processes of the application are freed up. When the reference count in the second memory control group cluster is zero, that is, when the applications are destroyed, the second memory control groups may be freed up, that is, all data, such as the relevant information of the memory space storing the relevant data of the applications and the method for managing the memory space storing the relevant data of the applications that are included in the second memory control groups, and the second identifiers of the second memory control groups, are deleted.

505: Update the first memory control group cluster based on the second memory control group cluster.

It may be understood that, the kernel may read, based on the call function, the second identifiers of the second memory control groups in the second memory control group cluster, and match the second identifiers with the first identifiers of the first memory control groups in the first memory control group. If a reference count of a second memory control group corresponding to a first memory control group is 0, after the second memory control group is freed up, the first memory control group may be freed up, that is, relevant information of memory space storing relevant data of an application and a method for managing the memory space storing the relevant data of the application that are included in the first memory control group are deleted, and a first identifier of the first memory control group are deleted from the first memory control group cluster.

The following describes the memory management method described in embodiments of this application in detail by using a specific example.

To avoid intrusive modification on kernel code, a memory control group may be written onto a memory management engine of a kernel layer and is separated from the kernel code. In addition, a life cycle of the memory control group in the memory management engine and a life cycle of the memory control group in a memory management module in a kernel may be the same by using an existing hook (hook) function in the kernel code. The memory management engine may be a hyperhold, and the hyperhold can open a call stack from an upper system to the kernel, to cause the kernel to completely sense the entire life cycle of the application and perform memory management with reference to a generation cycle of the application and a data access feature within the cycle.

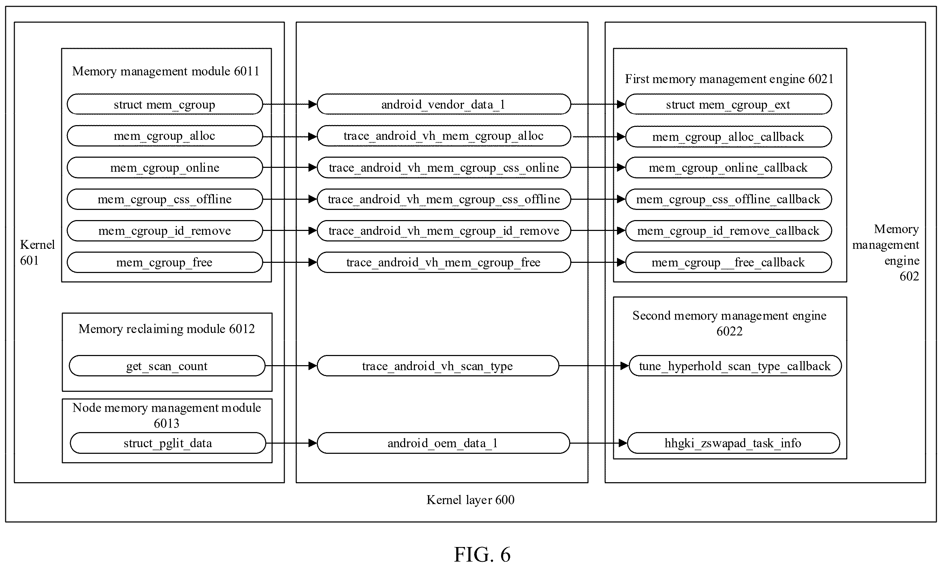

As shown in FIG. 6, a kernel layer 600 may include a kernel 601 and a memory management engine 602. The kernel 601 may include a memory management module 6011 (which may also be referred to as a native memory control group management module), a memory reclaiming module 6012, and a node memory management module 6013. The memory management engine 602 may include a first memory management engine 6021 and a second memory management engine 6022.

In some specific implementations, a plug-in structural body may be allocated at a reserved location (for example, android_vendor_data_1) of the kernel code to manage a memory. To be specific, a memory control group including relevant information describing memory space storing relevant data of an application and a method for managing the memory space storing the relevant data of the application is created in the first memory management engine 6021.

In some optional instances, a data structure of a memory control group in the memory management module 6011 may be struct mem_cgroup, and a data structure of the memory control group in the first memory management engine 6021 may be struct mem_cgroup_ext. The kernel 601 may call the memory control group in the first memory management engine 6021 based on a hook function, so that the memory control group in the memory management module 6011 is synchronized with the memory control group in the first memory management engine 6021, to manage the memory.

A manner for synchronizing the memory control group in the memory management module and the memory control group in the memory management engine may be as follows:

When the application is started, the memory may be applied to for the memory space storing the relevant data of the application, such as a file-backed page and an anonymous page. In addition, the memory management module in the kernel may create a first memory control group corresponding to the application and make the first memory control group online, and may also create a second memory control group corresponding to the first memory control group in the memory management engine. In some specific implementations, the kernel may create the first memory control group by using a call function mem_cgroup_alloc, and after the first memory control group is successfully created, the kernel may create the second memory control group by using a callback function trace_android_vh_mem_cgroup_alloc and a call function mem_cgroup_alloc_callback. The kernel may alternatively make the first memory control group online by using a call function mem_cgroup_online, and after the first memory control group is successfully online, the kernel may make the second memory control group online by using a callback function trace_android_vh_mem_cgroup_online and a call function mem_cgroup_online_callback.

When the application is destroyed, the memory management engine may make the second memory control group corresponding to the application offline, and may make the first memory control group corresponding to the second memory control group offline from the memory management module in the kernel. In some specific implementations, the kernel may make the second memory control group offline by using a call function mem_cgroup_css_offline_callback, and after the second memory control group is successfully offline, the kernel may make the first memory control group offline by using a callback function trace_android_vh_mem_cgroup_css_offline and a call function mem_cgroup_css_offline.

The memory management engine may remove an expansion identifier of a second internal control group corresponding to the application, and may remove an expansion identifier of the first memory control group from the memory management module in the kernel. In some specific implementations, the kernel may remove the identifier of the second memory control group by using a call function mem_cgroup_id_remove_callback, and after the identifier of the second memory control group is successfully removed, the kernel may remove the identifier of the first memory control group by using a callback function trace_android_vh_mem_cgroup_id_remove and a call function mem_cgroup_id_remove.

When all applications are destroyed, the memory management engine may free up second memory control groups corresponding to the applications, and may free up first memory control groups corresponding to the second memory control group from the memory management model in the kernel. In some specific implementations, the kernel may free up the second memory control groups by using a call function mem_cgroup_free_callback, and after the second memory control groups are successfully freed up, the kernel may free up the first memory control groups by using a callback function trace_android_vh_mem_cgroup_free and a call function mem_cgroup_free.

In some other specific implementations, a plug-in structural body may be allocated at a reserved location (for example, android_oem_data_1) of the kernel code to manage the memory in a non-uniform memory access (Non Uniform Memory Access, NUMA) architecture. To be specific, memory compression processes corresponding to different node memories in the NUMA architecture are created in the second memory management engine 6022 to manage the corresponding node memories.

The memory reclaiming module 6012 may include a function get_scan_count and control a reclaiming behavior of the function get_scan_count by using a function trace_android_vh_scan_type.

For example, when node memory pressure is large, the node memory management module 6013 may compress and store, based on a synchronized memory management process in the memory management module 6011, data in an anonymous page corresponding to the application into a compression page in block space, or dump the data in the compression page corresponding to the application into a dump page in a universal flash storage.

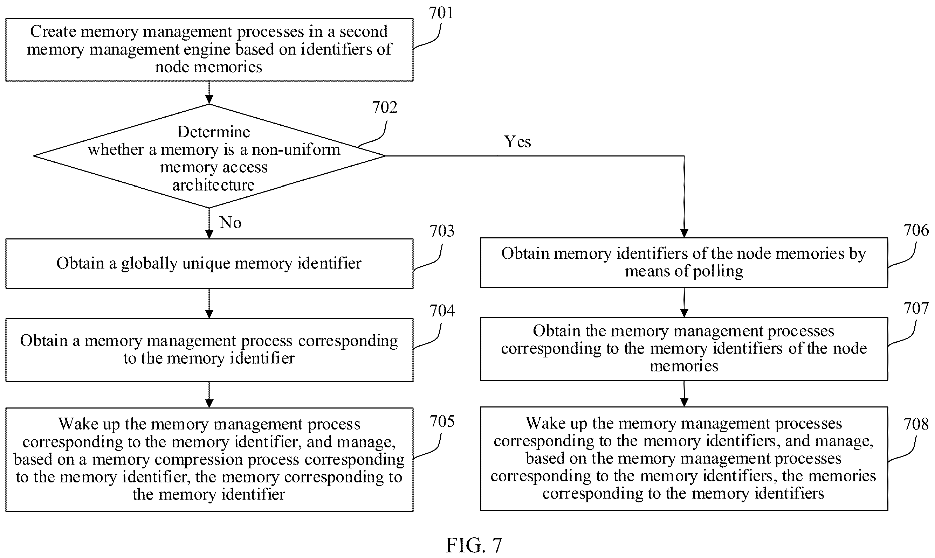

In some optional instances, a data structure of the node memory management module 6013 may be struct_pglit_data. The kernel 601 may call a memory compression process in the second memory management engine 6022 based on the hook function, so that the memory compression process in the node memory management module 6013 is synchronized with the memory management process in the second memory management engine 6022, to manage a node memory. A specific implementation in which the node memory management module performs memory management on each node memory is described in detail in FIG. 7.

The following describes the specific implementation in which the node memory management module performs memory management on the node memories. FIG. 7 shows a schematic flowchart of performing memory management on each node memory by a node memory management module. As shown in FIG. 7, the method for performing memory management on the node memories by the node memory management module may include the following steps:
701: Create memory management processes in a second memory management engine based on identifiers of the node memories.
   In some optional instances, the memory management process may be created for each node memory in the second memory management engine.
702: Determine whether a memory is a non-uniform memory access architecture. If the memory is not the non-uniform memory access architecture, step 703 is performed. If the memory is the non-uniform memory access architecture, step 706 is performed.
   In some optional instances, the non-uniform memory access (Non-uniform memory access, NUMA) architecture is a multi-processor computer-designed memory, and memory access time depends on a location of the memory relative to a processor.
703: Obtain a globally unique memory identifier.
   It may be understood that, each node memory in the NUMA may have one memory identifier, and the memory identifier may be a unique identity identifier of the node memory.
704: Obtain a memory management process corresponding to the memory identifier.
705: Wake up the memory management process corresponding to the memory identifier, and manage, based on the memory management process corresponding to the memory identifier, the memory corresponding to the memory identifier.
   It may be understood that, for a specific manner of managing the memory corresponding to the memory identifier, refer to FIG. 5. Details are not described herein again.
706: Obtain memory identifiers of the node memories by means of polling.
707: Obtain the memory management processes corresponding to the memory identifiers of the node memories.
708: Wake up the memory compression processes corresponding to the memory identifiers, and manage, based on the memory management processes corresponding to the memory identifiers, the memories corresponding to the memory identifiers.

It may be understood that, for a specific manner of managing the memories corresponding to the memory identifiers, refer to FIG. 5. Details are not described herein again.

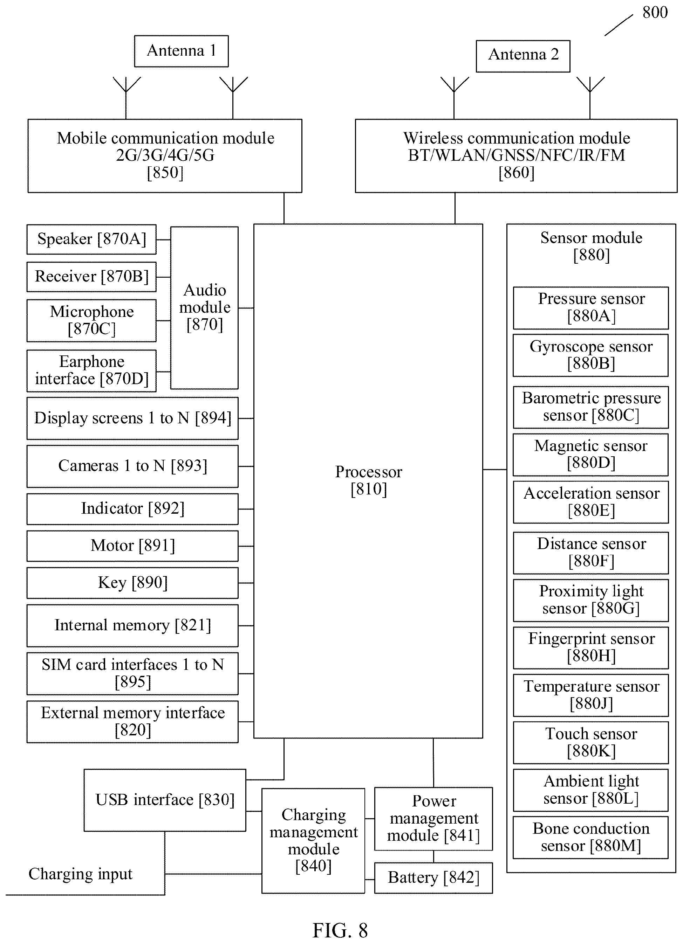

The following describes a hardware structure of an electronic device. As shown in FIG. 8, an electronic device 800 may include a processor 810, an external memory interface 820, an internal memory 821, a universal serial bus (universal serial bus, USB) interface 830, a charging management module 840, a power management module 841, a battery 842, an antenna 1, an antenna 2, a mobile communication module 850, a wireless communication module 860, an audio module 870, a speaker 870A, a receiver 870B, a microphone 870C, an earphone interface 870D, a sensor module 880, a key 890, a motor 891, an indicator 892, a camera 893, a display screen 894, a subscriber identification module (subscriber identification module, SIM) card interface 895, and the like. The sensor module 880 may include a pressure sensor 880A, a gyroscope sensor 880B, a barometric pressure sensor 880C, a magnetic sensor 880D, an acceleration sensor 880E, a distance sensor 880F, a proximity light sensor 880G, a fingerprint sensor 880H, a temperature sensor 880J, a touch sensor 880K, an ambient light sensor 880L, a bone conduction sensor 880M, and the like.

It may be understood that, a schematic structure of embodiments of the present invention does not constitute a specific limitation on the electronic device. In some other embodiments of this application, the electronic device 800 may include more or fewer components than those shown in the figure, or some components may be combined, or some components may be split, or a different component arrangement may be used. The illustrated components may be implemented by hardware, software, or a combination of software and hardware.

The processor 810 may include one or more processing units. For example, the processor 810 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, a neural-network processing unit (neural-network processing unit, NPU), and/or the like. Different processing units may be separate components, or may be integrated into one or more processors.

The controller may generate an operation control signal based on instruction operation code and a time-sequence signal, to control instruction fetching and instruction execution.

The processor 810 may further be provided with a memory configured to store instructions and data. In some embodiments, the memory of the processor 810 is a cache. The memory may store instructions or data that has been used or cyclically used by the processor 810. If the processor 810 needs to use the instructions or data again, the instructions or data may be directly called from the memory. This avoids repeated access and reduces a waiting time of the processor 810, thereby improving system efficiency.

The external memory interface 820 may be configured to connect to an external storage card, such as a Micro SD card, to extend a storage capability of the electronic device 800. The external storage card communicates with the processor 810 through the external memory interface 820, to implement a data storage function. For example, files such as music and videos are stored into the external storage card.

The internal memory 821 may be configured to store computer-executable program code, and the executable program code includes instructions. The internal memory 821 may include a program storage region and a data storage region. The program storage region may store an operating system, an application required by at least one function (such as a sound playback function and an image display function), and the like. The data storage region may store data (for example, audio data and an address book) and the like created during use of the electronic device 800. In addition, the internal memory 821 may include a high-speed random access memory, and may also include a non-volatile memory, for example, at least one magnetic disk storage device, a flash memory device, a universal flash storage (universal flash storage, UFS), or the like. The processor 810 runs the instructions stored in the internal memory 821, and/or the instructions stored in the memory arranged in the processor, to perform various function applications and data processing of the electronic device 800.

It should be noted that, units/modules described in device embodiments of this application are logical units/modules. In a physical manner, one logical unit/module may be one physical unit/module, may be a part of one physical unit/module, or may be implemented as a combination of a plurality of physical units/modules. A physical implementation of the logical units/modules is not the most important, and a combination of functions implemented by the logical units/modules is the key to resolving the technical problems proposed in this application. In addition, to highlight innovation of this application, the foregoing device embodiments of this application do not introduce a unit/module that is not closely related to resolving the technical problems provided in this application, but it does not indicate that there is no other unit/module in the foregoing device embodiments.

It should be noted that, in the examples and specification of the patent, relational terms such as "first" and "second" are merely used to distinguish an entity or operation from another entity or operation, and do not require or imply any actual relationship or sequence between these entities or operations. Moreover, the terms "include", "comprise", or any variants thereof are intended to cover a non-exclusive inclusion. Therefore, a process, method, article, or device that includes a series of elements not only includes such elements, but also includes other elements not specified expressly, or may include inherent elements of the process, method, article, or device. Unless otherwise specified, an element limited by "include a/an ..." does not exclude other same elements existing in the process, the method, the article, or the device that includes the element.

Although this application is shown and described with reference to some preferred embodiments of this application, a person of ordinary skill in the art should understand that various changes in form and details may be made therein without departing from the scope of this application.

## Claims

1. A memory management method, applied to an electronic device, wherein the electronic device comprises a kernel layer, the kernel layer comprises a memory management engine and a kernel, and the method comprises:
calling, by the kernel, a memory control group cluster in the memory management engine if a first storage of the electronic device satisfies a first preset condition, to compress data in a part of anonymous pages of the first storage and store the compressed data into first storage space in the first storage; and
calling, by the kernel, the memory control group cluster in the memory management engine if the first storage of the electronic device satisfies a second preset condition, to store a part or all of the compressed data in the first storage space into a second storage.

2. The method according to claim 1, wherein the first storage is a memory, and the second storage is a magnetic disk or a universal flash storage.

3. The method according to claim 1, wherein the first preset condition comprises: a data storage volume of the first storage is greater than a first preset data storage volume; and
the second preset condition comprises: the data storage volume of the first storage is greater than a second preset data storage volume, wherein a data storage volume difference between the first preset data storage volume and the second preset data storage volume is within a preset difference range.

4. The method according to claim 1, wherein a memory control group in the memory control group cluster comprises relevant information of memory space storing relevant data of an application; and
the calling, by the kernel, the memory control group cluster in the memory management engine, to store a part or all of the compressed data in the first storage space into a second storage comprises:
sending, by the kernel, an information obtaining instruction to the memory management engine; and
obtaining, by the kernel, the relevant information of the memory space storing the relevant data of the application, and storing the part or all of the compressed data in the first storage space into the second storage based on the relevant information.

5. The method according to claim 4, further comprising:
creating, when it is detected that the application is started, a first memory control group corresponding to the application in the kernel, to obtain a first memory control group cluster; and
creating a second memory control group corresponding to the first memory control group in the memory management engine, to obtain a second memory control group cluster.

6. The method according to claim 5, wherein the calling, by the kernel, a memory control group cluster in the memory management engine, to compress data in a part of anonymous pages of the first storage and store the compressed data into first storage space in the first storage comprises:
calling, by the kernel, the second memory control group cluster in the memory management engine, to cause a life cycle of the first memory control group in the first memory control group cluster to be the same as a life cycle of the corresponding second memory control group in the second memory control group cluster, wherein the life cycle of the first memory control group comprises any one of online, offline, removed, and free-up life stages of the first memory control group; and
compressing the data in the part of the anonymous pages of the first storage based on life stages of first memory control groups in the first memory control group cluster, and storing the compressed data into the first storage space in the first storage.

7. The method according to claim 6, wherein the compressing the data in the part of the anonymous pages of the first storage, and storing the compressed data into the first storage space in the first storage comprises:
compressing data in a part of the anonymous pages whose access frequency is lower than an average access frequency in the first storage, and storing the compressed data into the first storage space in the first storage.

8. The method according to claim 5, wherein the calling, by the kernel, the memory control group cluster in the memory management engine, to store a part or all of the compressed data in the first storage space into a second storage comprises:
calling, by the kernel, the second memory control group cluster in the memory management engine, to cause a life cycle of the first memory control group in the first memory control group cluster to be the same as a life cycle of the corresponding second memory control group in the second memory control group cluster, wherein the life cycle of the first memory control group comprises any one of online, offline, removed, and free-up life stages of the first memory control group; and
storing the part or all of the compressed data in the first storage space into the second storage based on life stages of first memory control groups in the first memory control group cluster.

9. The method according to claim 8, wherein the storing the part or all of the compressed data in the first storage space into the second storage comprises:
dumping a part or all of the compressed data whose accessed frequency is lower than an average access frequency in the first storage space into the second storage.

10. The method according to claim 1, wherein the electronic device comprises a non-uniform memory access architecture, and the method comprises:
calling, by the kernel, a memory management process in the memory management engine if a node memory in the non-uniform memory access architecture satisfies the first preset condition, to compress data in a part of anonymous pages of the node memory and store the compressed data into the first storage space in the first storage; and
calling, by the kernel, the memory management process in the memory management engine if the node memory in the non-uniform memory access architecture satisfies the second preset condition, to store a part or all of the compressed data in the node memory into the second storage.

11. An electronic device, comprising a memory, configured to store instructions executed by one or more processors of the electronic device; and a processor being one of the one or more processors of the electronic device, configured to perform the memory management method according to any one of claims 1 to 10.

12. A readable storage medium, storing instructions, wherein the instructions, when executed on an electronic device, enable the electronic device to perform the memory management method according to any one of claims 1 to 10.
